# FASCICULE DE BREVET EUROPEEN

(11) **EP 0 444 998 B1**
(45) Date de publication et mention de la délivrance du brevet: **13.10.1993**
(21) Numéro de dépôt: 91400453.6
(22) Date de dépôt: 20.02.1991
(51) Int. Cl.: B29C 47/02, B05C 5/02

(54) **Dispositif d'extrusion d'un profile à la périphérie de la surface d'un vitrage**
Vorrichtung zum Extrudieren eines Profils auf dem Umfang einer Glasscheibe
Apparatus for extruding a profile onto the periphery of a glazed surface

(30) Priorité: 26.02.1990 DE 4006006
(43) Date de publication de la demande: 04.09.1991
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Cornils, Gerd, 5161 Merzenich-Girbelsrath (DE); Siegel, Werner, W-5000 Köln 50 (DE); Kunert, Heinz, Dr ., W-5000 Köln 41 (DE); Schwartz, Ludwig, W-5100 Aachen (DE)
(74) Mandataire: Breton, Jean-Claude

(56) Documents cités:
- FR-A- 2 317 465
- FR-A- 2 367 179
- FR-A- 2 496 499
- US-A- 4 074 958
- PATENT ABSTRACTS OF JAPAN, vol. 8, no. 73 (M-287)[1510], 5 avril 1984;
- & JP-A-58 220 717 (TOYODA GOSEI K.K.) 22-12-1983

## Description

L'invention concerne un dispositif pour former un profilé à base d'un polymère directement sur la surface d'un objet, en particulier à la périphérie de la surface d'une feuille de verre, à l'aide d'une tête d'extrusion comportant une buse calibrée dont la section correspond à celle du profilé, ainsi qu'une chambre de répartition en amont de la buse et des canaux en amont de la chambre de répartition.

Il est connu d'équiper des vitrages automobiles d'un profilé en forme de cadre à base d'un polymère extrudable déposé directement à l'aide d'une buse d'extrusion sur la surface du verre éventuellement préparée dans ce but (demandes de brevets européens EP 121479 - 121480 - 121 481 - 256946 - 258128 - 298788 - 307317 - 345134 et demande de brevet français FR 2543533). La demande EP-345 134 décrit notamment une buse d'extrusion qui est mobile et se déplace à la périphérie du vitrage afin de déposer un tel profilé.

Le profilé extrudé durcit après son dépôt sur le verre. Il peut servir à différentes fonctions le plus souvent associées aux techniques de collage des vitrages automobiles dans les carrosseries. Par exemple, il peut servir de support à un cordon de colle qui sera déposé ultérieurement à la périphérie du vitrage lors de sa pose dans la carrosserie du véhicule. Dans ce cas le profilé comporte avantageusement une forme creuse qui sert de canal au cordon de colle. Il peut également servir simplement à limiter latéralement l'expansion du cordon de colle pour éviter que celui-ci ne déborde par exemple du côté du champ de vision du vitrage. Le profilé extrudé à la périphérie du vitrage peut également jouer un rôle dans le positionnement et le calage du vitrage avant que le cordon de colle n'ait durci. Enfin un profilé extrudé du même type peut avoir lui-même la forme d'une lèvre ou comporter une telle lèvre qui déborde de la périphérie du vitrage et permet d'obturer l'espace qui existe entre le vitrage et la carrosserie.

Un profilé extrudé à la périphérie d'un vitrage peut également exercer à lui seul des fonctions multiples. Une forme particulièrement intéressante est celle qui correspond à une section en forme de U avec une base relativement importante et une partie en forme de lèvre qui déborde vers l'extérieur. Dans ce cas la base du U sert à recevoir la colle destinée au montage du pare-brise tandis que les deux branches limitent l'expansion de la colle et que la lèvre débordante sert au centrage du vitrage au moment de la pose et, ultérieurement, à l'étanchéité et à la liaison vitrage/carrosserie. De telles utilisations sont de plus en plus répandus dans la pratique (voir par exemple l'ouvrage "Fahrzeugverglasung" de Karl-Heinz Brueck, édition Vieweg 1990).

Pour extruder le profilé directement sur le vitrage, on déplace une tête d'extrusion à la périphérie du vitrage sur tout le pourtour de celui-ci.

A l'aide des têtes d'extrusions existantes, on peut obtenir des profilés très réguliers même s'ils ont une section très compliquée. Il en est ainsi tant que le trajet du profilé est à peu prés rectiligne mais, malheureusement, dans les zones des coins du vitrage, la tête d'extrusion doit suivre une trajectoire courbe avec des rayons de courbure plus ou moins petits et la production de profilés avec une section régulière devient très problématique. Les difficultés sont d'autant plus grandes que le rayon est plus petit et cet effet est encore plus marqué lorsque le profilé comprend une lèvre périphérique débordante. En modifiant les paramètres de l'extrusion tels que la pression, la température ou la viscosité du polymère, on peut obtenir certaines améliorations mais malheureusement ces paramètres ne peuvent être variés que dans des limites réduites sous peine d'entraîner des conséquences néfastes pour les autres caractéristiques du profilé.

La mission de l'invention consiste à fournir un dispositif permettant de palier les inconvénients évoqués ci-dessus en particulier l'invention doit proposer une tête d'extrusion qui permette de produire un profilé parfaitement régulier même dans les coins du vitrage, là ou le rayon de courbure est réduit.

A partir d'un dispositif du type de ceux évoqués au début de cette description l'invention prévoit qu'au moins un canal qui débouche dans la chambre de répartition en amont de la buse soit équipé de moyens pour agir sur sa section tels qu'on puisse modifier le rapport du flux volumique dirigé vers la partie de la buse calibrée correspondant à un côté du profilé à celui du flux volumique dirigé vers la partie de la buse calibrée correspondant à l'autre côté.

Une tête d'extrusion conforme à l'invention, mobile et se déplaçant à la périphérie du vitrage, peut ainsi être contrôlée grâce à des moyens mécaniques de manière telle que le flux de matière sortant de la buse calibrée puisse être différent sur la largeur de la buse calibrée. On peut obtenir de la sorte que, lorsque le besoin de matière sur la largeur de la buse n'est pas le même, le débit puisse être varié en conséquence. Quand par exemple le profilé possède une section prismatique c'est à dire beaucoup plus importante d'un côté que de l'autre, on peut grâce aux moyens qui permettent de modifier le flux dans les canaux qui amènent la matière à la tête d'extrusion adapter les apports de matière à la forme du profilé on évite ainsi les turbulences dans la chambre de répartition. On voit que les moyens de l'invention présentent des avantages même lorsque la trajectoire du profilé est rectiligne.

Dans une forme de réalisation de l'invention, lorsqu'il existe par exemple un seul canal d'alimentation qui avant de déboucher dans la chambre de répartition a une section allongée qui couvre pratiquement toute la largeur de la buse, on peut utiliser un coulisseau adapté de manière à diminuer la section à une extrémité par rapport à l'autre. Le passage a alors la forme d'un triangle ou d'un coin et le profil des débits a le même aspect. Dans une autre forme de réalisation de l'invention le canal d'alimentation peut être constitué d'un tuyau déformable, les modifications de section étant obtenues grâce à un dispositif agissant sur le tuyau depuis l'extérieur.

Une autre forme de réalisation du dispositif selon l'invention se caractérise par le fait de la multiplication des canaux d'alimentation qui débouchent dans la chambre de répartition perpendiculairement à la direction du déplacement de la buse avec des distances relatives telles que l'un au moins des canaux puisse être alimenté directement avec la pression d'extrusion sans modification de section tandis que les autres verront leurs sections modifiables de manière à varier les débits avec la même pression. Ainsi dans le cas ou les canaux sont au nombre de deux le canal dirigé vers l'intérieur du vitrage peut voir sa section modifiée tandis que le canal alimentant la partie du profilé débordant de l'extérieur du vitrage sera toujours alimenté à plein débit. Le principe étant qu'au moins l'un des canaux soit équipé de moyens permettant de réguler le débit de matière qui transite par lui.

La tête d'extrusion équipée selon l'invention permet d'apporter une solution au problème de l'extrusion d'un profilé dans les zones périphériques du vitrage là où le rayon de courbure est très petit. On peut ainsi avoir dans ces zones un profilé dont la section est exactement la même que dans les zones rectilignes. La régulation de l'alimentation en matière des différentes parties internes et externes du profilé est à adapter en fonction justement de la courbure du profilé dans la zone concernée. Une régulation du type précédent qui permet d'adapter la section des canaux d'alimentation peut être obtenue mécaniquement grâce à un guide courbe placé dans les coins et sur lequel s'appuie un poussoir dont la course est déterminée par la forme et la position du guide. On peut également régler le débit grâce à une vanne commandée par un moteur lui-même programmé en fonction de la position de la tête d'extrusion à la périphérie du vitrage.

Selon une première forme de réalisation du dispositif à plusieurs canaux la tête d'extrusion est reliée à une seule conduite d'alimentation en polymère. Ainsi les canaux sont alimentés à la même pression. Dans ce cas les moyens de réglage du débit se trouvent à l'intérieur des canaux d'alimentation eux-mêmes.

Dans une autre forme de réalisation d'un dispositif conforme à l'invention les canaux débouchant dans la tête d'extrusion sont alimentés par des conduites séparées. Les moyens de régulation du débit transitant par les canaux peuvent dans ce cas être disposés en dehors de la tête d'extrusion. Par exemple dans ce cas chaque conduite d'alimentation peut être équipée de son propre doseur ou même d'une pompe autonome. Les doseurs ou les pompes étant alimentés chacun dans des conditions qui dépendent de la position de la tête d'extrusion et de sa vitesse à la périphérie du vitrage.

Des avantages supplémentaires ainsi que les détails de l'invention apparaîtront à la lecture de la description et des différents exemples de réalisation figurant dans les dessins. Parmi ceux-ci :

La figure 1 représente le schéma de principe d'une tête d'extrusion conforme à l'invention dans une vue en perspective, en partie en coupe.

La figure 2 représente un dispositif conforme à l'invention qui est commandé par un guide courbe.

La figure 3 montre une tête d'extrusion commandée par un servomoteur.

La figure 4 est une coupe du dispositif de la figure 3, quant à la figure 5 elle représente un dispositif conforme à l'invention avec des conduites d'alimentation séparées.

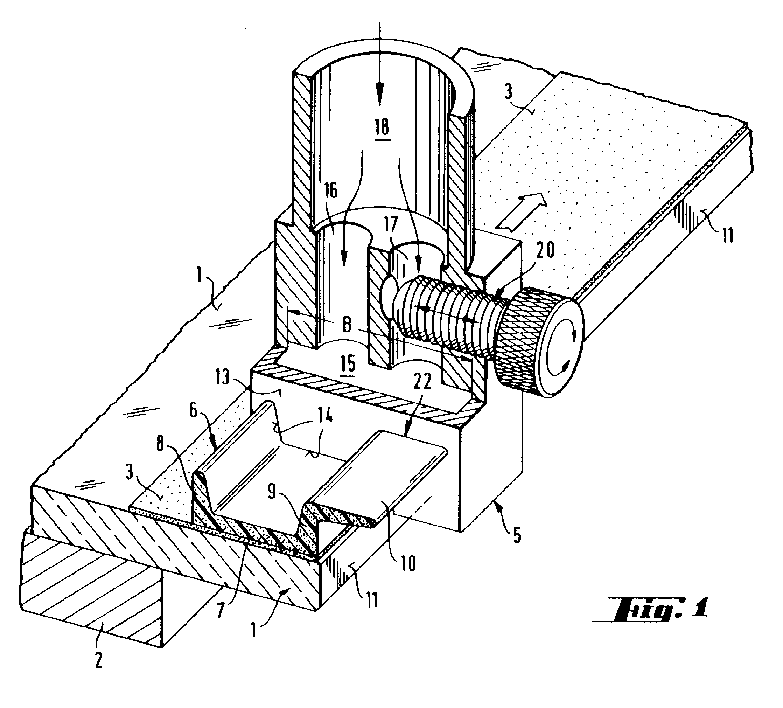

Comme le montre la figure 1 en détail, le vitrage 1 sur lequel le profilé à extruder doit être déposé repose pendant cette opération sur un support 2. Il est fixé sur ce support grâce à des ventouses ou à des plateaux aspirants non représentés. La périphérie du vitrage 1, à l'endroit où le profilé doit être déposé est revêtue d'une couche d'émail opaque 3 en forme de cadre. Cette couche 3 qui joue également un rôle esthétique est déposée par une technique de sérigraphie utilisant un émail destiné à être cuit au feu.

La tête d'extrusion 5 permet de déposer un polymère extrudable sous la forme du profilé 6 à la périphérie du vitrage c'est à dire sur la couche 3. Eventuellement on aura pu, dans une phase de production supplémentaire, traiter la surface destinée à recevoir le profilé 6 à l'aide d'un liquide nettoyant et même de prévoir le dépôt d'un promoteur d'adhérence. Ces phases de la production sont bien connues. En général le polymère destiné à constituer le profilé 6 est un polyuréthane monocomposant polymérisant à l'humidité de l'air ou alors un système de polyuréthane à deux composants.

Le profilé 6 tel qu'il est représenté comporte sur sa section une partie en forme de U avec une base 7, une aile verticale 8 sensiblement perpendiculaire à la base 7 et une seconde aile verticale 9 également perpendiculaire à la base 7. De plus une lèvre 10 perpendiculaire à l'aile 9 déborde de la périphérie 11 du vitrage 1 d'une longueur comprise par exemple entre 5 et 10 mm.

La tête d'extrusion 5 destinée à engendrer le profilé 6 sur le vitrage 1 est équipée sur sa face 13 opposée à la direction d'avancement d'une buse 14 calibrée. Celle-ci est ouverte dans sa partie inférieure. A l'intérieur de la tête d'extrusion 5 on trouve derrière la buse 14 une chambre de répartition 15 dont la largeur B correspond sensiblement à celle de la buse 14. Dans cette chambre 15 débouchent dans sa partie supérieure deux canaux, l'un, le canal 16 situé au dessus de la partie en forme de U du profil 6 et l'autre, le canal 17 au dessus de la zone où la lèvre 10 sera formée. Ces deux canaux 16 et 17 proviennent du tube 18 qui est relié au tube souple destiné à approvisionner la tête d'extrusion en monomère.

Le passage utile du canal 17 peut être modifié grâce à un dispositif limiteur de débit approprié. Sur la figure, on a représenté une vis 20 perpendiculaire à l'axe du canal 17 qui permet d'en diminuer la section. Lorsqu'on travaille à la main, si par exemple la lèvre 10 issue de la partie 22 de la buse d'extrusion 14 montre des défauts dus à un excès de polymère, comme par exemple des frisures, une action sur la vis 20 permettra de diminuer le flux de matière jusqu'à ce que la géométrie de la lèvre 10 redevienne satisfaisante.

Si au contraire la partie 22 de la buse 14 délivre trop peu de matière ce qui se manifeste par une épaisseur de la lèvre 10 trop faible, en dévissant la vis 20, on pourra accroître le flux traversant le canal 17 et augmenter ainsi l'épaisseur de la lèvre 10.

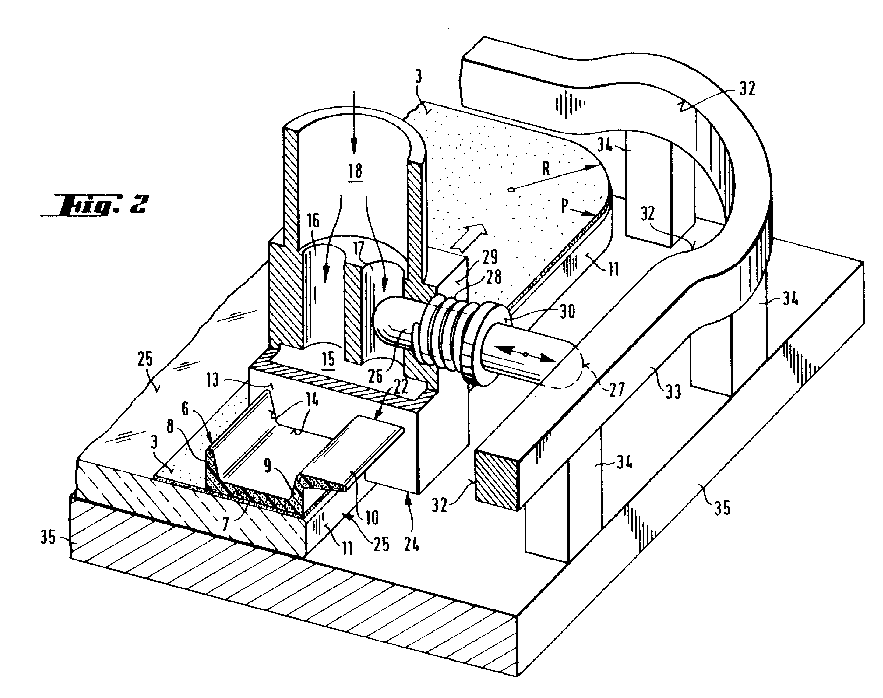

Sur la figure 2 on a représenté les parties essentielles d'un dispositif permettant l'extrusion d'un profilé 6 avec une modification automatique de la section du canal 17 pendant l'extrusion elle-même, c'est à dire pendant que la tête d'extrusion 24 se déplace le long de la surface périphérique 11 du vitrage 25. La tête d'extrusion 24 est constituée des mêmes éléments que celle de la figure 1, c'est à dire que la face arrière 13 comporte à nouveau une buse 14 calibrée dont la partie extérieure 22 engendre la lèvre 10 qui déborde du vitrage. De même deux canaux 16 et 17 sont prévus, le canal 17 étant disposé au dessus de la zone 22. Ces canaux débouchent tous les deux dans la chambre d'alimentation 18 où ils sont alimentés en masse à polymériser.

Cette fois-ci l'organe destiné à modifier le passage utile du canal 17 est un piston 26 qui glisse dans une lumière dont l'axe est perpendiculaire au canal 17. A son extrémité externe le piston 26 comporte une surface d'appui 27. Le piston 26 est ramené en permanence grâce à un ressort 28 vers l'extérieur du vitrage. Le ressort 28 s'appuie d'une part sur le bâti 29 de la tête d'extrusion et d'autre part sur une collerette 30 liée au piston. De cette manière le piston 26 s'appuie en permanence sur la face interne 32 du guide courbe 33. Celui-ci est relié au support 35 du vitrage grâce à des pièces de liaison 34.

Dés que la tête d'extrusion 24 dans son parcours le long de la périphérie 11 du vitrage approche du point P, là où commence la zone du vitrage avec un rayon de courbure R, le guidecourbe commence par présenter une courbure dans le sens opposé, de telle manière que le piston 26 sous l'action du ressort 28 se déplace vers l'extérieur en augmentant le passage à l'intérieur du canal 17. Le flux de matière dans le canal 17 s'en trouve augmenté et le débit dans la partie 22 de la buse 14 croît. Comme dans cette zone la lèvre 10 qui possède un rayon de courbure supérieur à celui de la partie interne du profilé nécessite une quantité de matière supérieure pour garder ses caractéristiques, elle peut être réalisée sans défaut. Dés que la région du coin du pare-brise est quittée par la tête d'extrusion la distance entre le guide courbe 32 et la périphérie 11 du verre décroît de nouveau et le piston 26 se trouve ramené à sa position d'origine correspondant à une trajectoire rectiligne.

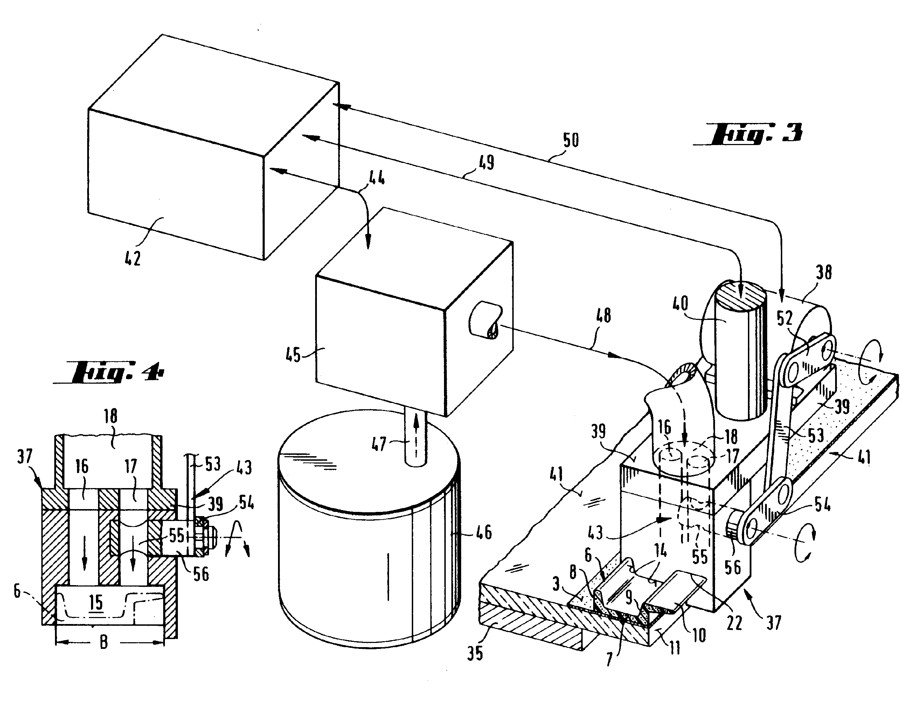

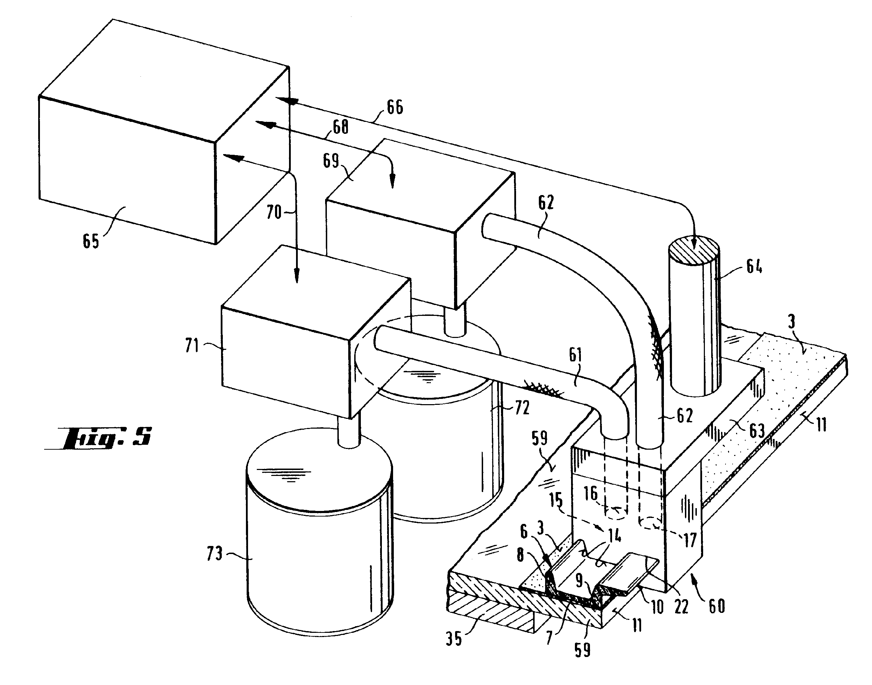

Les figures 3 et 4 montrent sous forme schématique un exemple de réalisation d'un dispositif conforme à l'invention dans lequel la régulation du débit au travers du canal 17 dans la tête d'extrusion s'effectue grâce à un servomoteur 38. A la place du servomoteur 38 on peut évidemment utiliser un système de commande hydraulique programmé. La tête d'extrusion 37 et le servomoteur 38 sont supportés par le même bâti 39. Le bâti 39 se trouve à l'extrémité du bras 40 d'un robot qui n'est pas représenté. Le mouvement de ce bras 40 est déterminé en fonction du contour du vitrage 41 en fonction d'un programme délivré par le dispositif de commande schématisé en 42. Simultanément à ce programme qui concerne le bras 40, le dispositif de commande 42 délivre des instructions d'une part pour la fourniture et le dosage de la matière à extruder et d'autre part pour la commande de la vanne 43 qui modifie la section du canal 17 conduisant à la chambre de répartition 15. Les ordres provenant du dispositif de commande 42 qui sont destinés à régler le dosage et la fourniture de la matière sont transmis par les lignes de commande 44 à la station de pompage et de dosage 45. La pompe comprise dans cette station 45 permet de transférer la masse à polymériser nécessaire depuis le réservoir 46 par l'intermédiaire de la conduite 47 jusqu'au dispositif de dosage adapté et grâce à la conduite 48 jusqu'à la tête d'extrusion 37.

De même que les ordres sont transmis grâce à la ligne 49 au bras 40 du robot en fonction du programme préétabli pour la tête d'extrusion, de même les ordres sont transmis par la liaison 50 au moteur 38 lui-même. Sur l'axe de ce moteur 38 on a prévu une manivelle 52 qui grâce à la bielle 53 transmet son mouvement au levier 54 qui commande le cylindre 56 modifiant la section du canal 17.

La figure 5 montre de même, de manière schématique, une autre forme de réalisation du dispositif de l'invention. Ici la tête d'extrusion 60 n'est pas équipée directement de moyens de régulation du débit du canal 17, mais au contraire chacun des deux canaux d'alimentation est équipé d'une conduite d'amenée de matière indépendante. Le canal 16 situé du côté du milieu du vitrage 59 est relié à un tuyau d'alimentation 61 et parallèlement le canal 17 situé au dessus de la lèvre 10 est relié à un tuyau d'alimentation 62. La tête d'extrusion 60 est ici aussi montée sur une platine 63 elle-même reliée au bras 64 d'un robot. Le système de commande du bras du robot est relié à celui-ci depuis l'organe de commande 65 grâce à la liaison 66.

L'organe de commande 65 sert ici à donner des ordres aux systèmes de pompage et de dosage 69 et 71 grâce aux connections respectives 68 et 70.

La pompe doseuse 69 distribue la masse à extruder provenant du réservoir 72 par l'intermédiaire de la canalisation 62 en quantité déterminée dans un des canaux de la tête d'extrusion 60 tandis que la pompe doseuse 71 en fait de même à partir du réservoir 73 par l'intermédiaire du tuyau 61 dans l'autre canal. Grâce au programme prédéterminé, les quantités variables des deux canaux seront débitées en fonction de la position et de la vitesse de la buse d'extrusion à la périphérie du vitrage. Le programme est évidemment conçu de manière que le profilé obtenu soit optimisé.

Le dispositif représenté figure 5 peut être également utilisé pour engendrer un profilé à la périphérie du vitrage dans lequel la lèvre 10 est faite d'un autre matériau que celui constituant le reste du profilé. Ainsi on peut délivrer au travers du tuyau 61 grâce à la pompe doseuse 71 reliée au réservoir 73 un polyuréthane monocomposant polymérisant grâce à l'humidité de l'air, polyuréthane qui après polyumérisation possède un module d'élasticité élevé tandis que la lèvre 10 sera alimentée quant à elle à partir du réservoir 72 et du tuyau 62 en polyuréthane monocomposant du même type mais avec un module sensiblement plus faible de manière à posséder une élasticité supérieure. On peut même envisager conformément à l'invention l'extrusion de deux polymères de nature différente.

Les exemples de réalisation présentés ici montrent l'application du dispositif de l'invention à la production de vitrages automobiles en particulier destinés au collage dans la carrosserie. Mais on peut également l'appliquer avec le même succès à des vitrages comportant un profilé plastique périphérique. C'est ainsi qu'il est possible d'équiper avec le dispositif de l'invention des feuilles de verre telles que des fenêtres de voiture, d'armoires frigorifiques, etc... pour les doter d'un profilé en polymère périphérique. Un tel profilé, lorsque sa matière est un élastomère, joue un rôle d'étanchéité. On peut ainsi éviter la réalisation de filières traditionnelles pour l'extrusion d'élastomères en les remplaçant par le dispositif de l'invention de conception beaucoup plus souple et plus simple à mettre en oeuvre.

## Revendications

1. Dispositif pour former un profilé (6) à base d'un polymère directement sur la surface d'un objet en particulier à la périphérie de la surface d'un vitrage (1), à l'aide d'une tête d'extrusion (5, 24; 37, 60) que l'on déplace à la périphérie dudit vitrage (1) et qui comporte une buse calibrée (14) dont la section correspond à celle du profilé, ainsi qu'une chambre de répartition (15) en amont de la buse et des canaux (16, 17, 18), en amont de la chambre de répartition **caractérisé en ce qu'** au moins un canal (17) qui débouche dans la chambre de répartition (15) en amont de la buse (14) est équipé de moyens pour agir sur sa section tels qu'on puisse modifier le rapport du flux volumique dirigé vers la partie de la buse calibrée (14) correspondant à un côté du profilé à celui du flux volumique dirigé vers la partie de la buse calibrée (14) correspondant à l'autre côté.

2. Dispositif selon la revendication 1 **caractérisé en** **ce que** les moyens pour agir sur la section du canal sont réglables en fonction du rayon de courbure de la trajectoire suivie par la tête d'extrusion (5, 24 ; 37, 60).

3. Dispositif selon la revendication 1 ou la revendication 2 **caractérisé en ce que** la tête d'extrusion (5, 24 ; 37 ; 60) comporte au moins deux canaux (16, 17) dont la direction est perpendiculaire à la direction du déplacement de la buse qui débouchent dans la chambre de répartition (15) à des emplacements écartés de manière telle que ce soit le canal (16) qui alimente pour l'essentiel la partie de la buse calibrée (14) dirigée du côté de la surface interne du vitrage tandis que le canal (17) alimente pour l'essentiel la partie (22) dirigée vers l'extérieur du vitrage (1), à l'aide d'un polymère maintenu sous pression et **en ce qu'** au moins un des deux canaux (16, 17) soit équipé de moyens pour régler le flux du polymère le traversant.

4. Dispositif selon la revendication 3 **caractérisé en** **ce que** les deux canaux (16, 17) sont reliés à un système de pompage et de dosage (45) par une canalisation commune (18, 48) **et que** pour agir sur le débit du flux de polymère dans le canal (17) on a prévu une vanne (20 ; 26 ; 43) qui modifie le passage du canal (17).

5. Dispositif selon la revendication 3 **caractérisé en** **ce que** chacun des canaux (16, 17) est relié dans la tête d'extrusion à sa propre canalisation d'alimentation (61, 62) et **en ce que** la régulation du débit des canaux (16, 17) est réalisée à l'extérieur de la tête d'extrusion.

6. Dispositif selon la revendication 5 **caractérisé en** **ce que** chacune des canalisations d'alimentation (61, 62) est reliée à son propre dispositif de pompage et de dosage (69, 71) qui peut être commandé indépendamment.

7. Dispositif selon l'une des revendications 1 à 6 **caractérisé en ce que** les moyens pour régler le débit comportent un guide courbe (33) dont la surface (32) sert de came grâce à laquelle une vanne (26) est commandée le long de la trajectoire de la buse d'extrusion (24) lorsqu'elle parcourt la périphérie (11) du vitrage (25).

8. Dispositif selon l'une des revendications 1 à 6 **caractérisé en ce que** les moyens pour régler le débit comportent un système de commande (42) programmable qui en plus de la commande de la trajectoire de la tête d'extrusion (37) agit simultanément sur un servomoteur (38) qui commande la vanne (43).

## Patentansprüche

1. Vorrichtung zum Formen eines Profilstrangs (6) aus einem Polymer unmittelbar auf der Oberfläche eines Gegenstandes, insbesondere auf dem Randbereich der Oberfläche einer Glasscheibe (1), mit Hilfe eines Extrusionskopfes (5,24,37,60), der am Rand der Glasscheibe (1) entlanggeführt wird und der eine kalibrierte Düse (14) mit einem dem Querschnitt des Profils entsprechenden Querschnitt, eine vor der Düse angeordnete Verteilerkammer (15) und vor der Verteilerkammer angeordnete Zuführungskanäle (16,17,18) umfaßt, **dadurch gekennzeichnet,** daß wenigstens ein in die vor der Düse (14) angeordnete Verteilerkammer (15) mündender Kanal (17) mit Mitteln zum Einwirken auf seinen Querschnitt versehen ist, die es gestatten, das Verhältnis des Volumenstroms, der zu dem der einen Seite des Profils entsprechenden Teil der kalibrierten Düse (14) gerichtet ist, zu dem Volumenstrom, der zu dem der anderen Seite des Profils entsprechenden Teil der kalibrierten Düse (14) gerichtet ist, zu verändern.

2. Vorrichtung nach Anspruch 1, **dadurch gekennzeichnet,** daß die Mittel zum Einwirken auf den Querschnitt des Kanals in Abhängigkeit von dem Krümmungsradius der von dem Extrusionskopf (5,24,37,60) durchlaufenen Wegstrecke regelbar sind.

3. Vorrichtung nach Anspruch 1 oder 2, **dadurch** **gekennzeichnet,** daß der Extrusionskopf (5,24,37,60) wenigstens zwei Kanäle (16,17) umfaßt, die senkrecht zur Bewegungsrichtung der Düse ausgerichtet sind und mit einem solchen gegenseitigen Abstand in die Verteilerkammer (15) münden, daß der Kanal (16) im wesentlichen den zur inneren Oberfläche der Glasscheibe gerichteten Teil der kalibrierten Düse (14), und der Kanal (17) im wesentlichen den zum Rand der Glasscheibe (1) gerichteten Teil mit dem unter Druck stehenden Polymer versorgt, und daß wenigstens einer der beiden Kanäle (16,17) mit Mitteln zum Regeln des hindurchfließenden Polymerstroms versehen ist.

4. Vorrichtung nach Anspruch 3, **dadurch** **gekennzeichnet,** daß die beiden Kanäle (16,17) über eine gemeinsame Leitung (18,48) an ein Pump- und Dosiersystem (45) angeschlossen sind, und daß zum Einwirken auf den Polymerstrom im Kanal (17) ein den Durchtrittsquerschnitt des Kanals (17) veränderndes Ventil (20,26,43) vorgesehen ist.

5. Vorrichtung nach Anspruch 3, **dadurch gekennzeichnet,** daß jeder Kanal (16,17) im Extrusionskopf an seine eigene Versorgungsleitung (61,62) angeschlossen ist, und daß die Regelung des Durchsatzes der Kanäle (16,17) außerhalb des Extrusionskopfes erfolgt.

6. Vorrichtung nach Anspruch 5, **dadurch gekennzeichnet,** daß jede Versorgungsleitung (61,62) an seine eigene Pump- und Dosiervorrichtung (69,71) angeschlossen ist, die unabhängig voneinander steuerbar sind.

7. Vorrichtung nach einem der Ansprüche 1 bis 6, **dadurch gekennzeichnet,** daß die Mittel zur Veränderung des Durchsatzes eine gekrümmte Führungsschablone (33) umfassen, deren Oberfläche (32) als Nocke dient, durch die ein Ventil (26) gesteuert wird, wenn die Extrusionsdüse (24) an der Umfangsfläche (11) der Glasscheibe (25) entlangläuft.

8. Vorrichtung nach einem der Ansprüche 1 bis 6, **dadurch gekennzeichnet,** daß die Mittel zur Regelung des Durchsatzes ein programmierbares Steuersystem (42) umfassen, das außer der Wegsteuerung für den Extrusionskopf (37) gleichzeitig einen Servomotor (38) ansteuert, der das Ventil (43) regelt.

## Claims

1. Device for forming a profile (6) based upon a polymer directly onto the surface of an object, especially onto the periphery of the surface of a pane (1), by means of an extrusion head (5, 24; 37, 60) which is moved along the periphery of said pane (1) and which comprises a calibrated nozzle (14), the cross-section of which corresponds to that of the profile, and also a distribution chamber (15) upstream of the nozzle and ducts (16, 17, 18) upstream of the distribution chamber, characterized in that at least one duct (17) which leads into the distribution chamber (15) upstream of the nozzle (14) is equipped with means for acting upon its cross-section, such that it is possible to modify the proportion of the volumetric flow directed towards the part of the calibrated nozzle (14) corresponding to one side of the profile to that of the volumetric flow directed towards the part of the calibrated nozzle (14) corresponding to the other side.

2. Device according to Claim 1, characterized in that the means for acting on the cross-section of the duct can be regulated as a function of the radius of curvature of the path followed by the extrusion head (5, 24; 37, 60).

3. Device according to Claim 1 or 2, characterized in that the extrusion head (5, 24; 37, 60) comprises at least two ducts (16, 17), the direction of which is perpendicular to the direction of displacement of the nozzle, which lead into the distribution chamber (15) at positions separated in such a way that it is the duct (16) which supplies basically the portion of the calibrated nozzle (14) towards the internal surface of the pane whereas the duct (17) supplies basically the portion (22) towards the outside of the pane (1), with a polymer kept under pressure and in that at least one of the two ducts (16, 17) is equipped with means for regulating the flow of the polymer passing through it.

4. Device according to Claim 3, characterized in that the two ducts (16, 17) are connected to a pumping and metering system (45) by a common piping system (18, 48) and that, for acting on the rate of the polymer flow in the duct (17), a valve (20; 26; 43) has been provided, which modifies the passage of the duct (17).

5. Device according to Claim 3, characterized in that each of the ducts (16, 17) is connected in the extrusion head to its own supply piping system (61, 62) and in that the regulation of the flow rate of the ducts (16, 17) is performed outside the extrusion head.

6. Device according to Claim 5, characterized in that each of the supply piping systems (61, 62) is connected to its own pumping and metering device (69, 71), which can be independently controlled.

7. Device according to one of Claims 1 to 6, characterized in that the means for regulating the flow rate comprise a curved guide (33), the surface (32) of which serves as a cam, by means of which a valve (26) is controlled along the path of the extrusion nozzle (24) as it travels along the periphery (11) of the pane (25).

8. Device according to one of Claims 1 to 6, characterized in that the means for regulating the flow rate comprise a programmable control system (42) which, in addition to the control of the path of the extrusion head (37), acts simultaneously on a servo-motor (38) which controls the valve (43).
